# FASCICULE DE BREVET EUROPEEN

(11) **EP 1 862 250 B1**
(45) Date de publication et mention de la délivrance du brevet: **21.10.2009**
(21) Numéro de dépôt: 07108671.4
(22) Date de dépôt: 22.05.2007
(51) Int. Cl.: B23K 23/00, E01B 29/44, E01B 11/52, B22D 19/04, B22D 19/10, B22C 9/02, B22C 9/22, E01B 31/18

(54) **Moule pour la soudure aluminothermique de rails de chemin de fer dont l'un, au moins est usé, le moule présentant des parties protégées par un revêtement compressible et des parties exposées et retaillables**
Form zum Aluminium-Thermoschweißen von Eisenbahnschienen, von denen mindestens eine abgenutzt ist, die Form aufweisend duch verformbares Material geschützte Teile und nicht geschützte Teile, die bearbeitbar sein können
Mould for thermit welding of railway tracks in which at least one is worn, the mould presenting parts protected by compressible material and non protected machinable parts

(30) Priorité: 29.05.2006 FR 0604750
(43) Date de publication de la demande: 05.12.2007
(73) Titulaire: Railtech International, 59590 Raismes (FR)
(72) Inventeur: Delcroix, Frédéric, 59171 Hellesmes (FR)
(74) Mandataire: Le Forestier, Eric

(56) Documents cités:
- EP-A- 0 802 013
- FR-A1- 2 396 620
- US-A- 3 113 359

## Description

La présente invention concerne un moule pour la soudure aluminothermique de rails de chemin de fer mutuellement alignés longitudinalement, du type comportant plusieurs pièces en matériau réfractaire rigide, susceptibles d'être assemblées temporairement autour de deux abouts transversaux de rail à souder en définissant ensemble :
- une empreinte de moulage, ouverte vers le haut, agencée pour recevoir par coulée un métal de soudure à l'état liquide et enveloppant les deux abouts, un intervalle ménagé entre eux et une première zone de chaque rail, immédiatement voisine de l'about correspondant, pour communiquer une forme déterminée au métal de soudure pendant sa solidification,
- deux portées continues agencées pour prendre appui contre une deuxième zone de chaque rail immédiatement voisine de la première zone de celui-ci, à l'opposé de l'about correspondant par rapport à cette première zone, et portant solidairement un revêtement compressible d'étanchéification dudit appui à l'encontre du métal de soudure à l'état liquide (voir, par exemple, FR 2 396 620).

Un moule de ce type est exploité avec succès par la Demanderesse, depuis des décennies, dans un mode de réalisation dans lequel ses pièces, réalisées en sable aggloméré pour faciliter sa destruction après un usage unique, sont principalement au nombre de trois, à raison :
- de deux moitiés supérieures de moule, approximativement identiques, qui constituent l'image spéculaire l'une de l'autre par rapport à un plan longitudinal moyen commun aux deux rails à assembler et enveloppent, d'un côté respectif de ces deux rails, des zones de ces derniers et de l'intervalle ménagé entre eux qui correspondent au dessus du patin, à l'âme, au dessous, aux côtés et au dessus du champignon, et
- d'une pièce inférieure ou de fond, présentant la forme générale d'une plaque qui complète les deux parties supérieures en dessous du patin des rails et de la zone correspondante de l'intervalle ménagé entre eux.

Ces trois pièces sont retenues entre elles, autour des rails à assembler, au moyen d'une carcasse métallique, quant à elle réutilisable.

Lors de son apparition, le moule ainsi réalisé a constitué un progrès considérable en permettant, du fait de la présence du revêtement compressible d'étanchéification, en pratique un feutre réfractaire fixé au moyen d'une colle réfractaire sur l'intégralité des portées d'appui, d'obtenir sans difficulté une étanchéité de l'empreinte à l'encontre d'un passage du métal de soudure à l'état liquide en limitant dans la plupart des cas le recours au lutage, à cet effet, à un simple complément de précaution.

Grâce à la compressibilité du revêtement d'étanchéification et à une géométrie convenablement choisie des portées d'appui, on obtient une telle étanchéité entre chaque portée et la deuxième zone du rail correspondant non seulement lorsque celui-ci est neuf, mais également lorsque celui-ci présente un certain degré d'usure de son champignon, à savoir généralement tant que celui-ci n'a pas perdu plus de trois millimètres par usure dans le sens de la hauteur, que cette usure concerne les deux rails à souder ou un seul d'entre eux.

A cet égard, on rappellera que lorsque l'on soude mutuellement deux rails différemment usés, par exemple un rail neuf et un rail ayant déjà servi, ou deux rails ayant déjà servi mais présentant des usures différentes, on veille à aligner le dessus de leur champignon, constituant la surface de roulement des véhicules ferroviaires, en décalant mutuellement, dans le sens de la hauteur, les patins respectifs et, corrélativement, les âmes et dessous de champignon respectifs, le terme « champignon » devant être entendu ici dans un sens large, incluant toute forme élargie de la partie supérieure d'un rail de chemin de fer, qu'il s'agisse d'un rail à profil Vignole ou similaire ou d'un rail à gorge.

Si, par contre, l'usure du champignon de l'un, au moins, des rails est plus prononcée, le revêtement compressible d'étanchéification n'est plus en mesure de la compenser, et l'on utilise alors généralement des moules de type plus ancien, dont les portées d'appui sont démunies de revêtement compressible d'étanchéification et dont on assure l'étanchéification vis-à-vis des rails exclusivement par lutage, avec les inconvénients qui en résultent en termes de temps nécessaire à l'étanchéification convenable d'un moule vis-à-vis des rails à souder, en termes de sécurité à l'encontre des fuites de métal de soudure à l'état liquide et en termes de qualité d'aspect des bords de la soudure.

Le but de la présente invention est de remédier à ces inconvénients en proposant un moule du type indiqué en préambule qui soit susceptible de s'adapter à des rails d'usure plus prononcée, en conservant les avantages de la présence de revêtement compressible d'étanchéification pour assurer l'étanchéité des portées d'appui vis-à-vis des rails.

A cet effet, la présente invention propose un moule du type indiqué en préambule, où le dit revêtement compressible est limité à des parties de chaque portée d'appui correspondant au dessous, aux côtés et au dessus d'un patin du rail correspondant, aux côtés d'une âme du rail correspondant et au dessous d'un champignon du rail correspondant, en ce que ledit matériau réfractaire rigide est directement exposé dans des parties de chaque portée d'appui correspondant aux côtés et au dessus du champignon du rail correspondant, en ce que chaque portée d'appui présente, entre sa partie correspondant au dessus du champignon du rail correspondant et ledit revêtement compressible de sa partie correspondant au dessous du champignon du rail correspondant, à l'état comprimé au maximum en référence à des conditions normales d'utilisation, un espacement qui est inférieur à l'espacement (h) entre le dessus et le dessous du champignon d'un rail neuf, et en ce que ledit matériau réfractaire rigide est choisi ou traité pour faciliter son enlèvement sélectif au moins dans les parties de chaque portée d'appui correspondant au dessus du champignon du rail correspondant et permettre ainsi une adaptation du moule à des rails dont le champignon est usé, avec appui continu des dites portée d'appui au dessous, sur les côtés et au dessus du patin des deux rails, sur les côtés de l'âme des deux rails et au dessous, sur les côtés et au dessus du champignon des deux rails.

Naturellement, dans un moule selon l'invention comme dans un moule du type indiqué en préambule, tel qu'il est actuellement exploité par la Demanderesse, le matériau réfractaire rigide constitutif des différentes pièces du moule peut avantageusement être constitué par un sable aggloméré et le revêtement d'étanchéification comporter un feutre de fibres réfractaires liées par un liant réfractaire, collé aux pièces constitutives du moule au moyen d'une colle réfractaire.

Un Homme du métier comprendra aisément qu'à partir du moment où l'on a dimensionné de façon appropriée l'espacement entre la partie de chaque portée d'appui correspondant au dessus du champignon du rail correspondant et le revêtement compressible de sa partie correspondant au dessous du champignon du rail correspondant, en référence à un état de compression maximale de ce revêtement dans des conditions normales d'utilisation, on peut aisément, par enlèvement d'une épaisseur choisie du matériau constitutif du moule à partir de l'une ou de chacune des parties des portées d'appui correspondant au dessus du champignon des rails, adapter étroitement cet espacement aux dimensions que le champignon de chaque rail présente entre son dessus et son dessous, et ceci dans une gamme considérablement plus large de possibilités que dans les moules du même type jusqu'à présent exploités par la Demanderesse.

On pourra certes observer que les parties des portées d'appui correspondant au dessus du champignon des rails et aux côtés de ce champignon, c'est-à-dire aux parties des rails destinées à venir au contact des roues des véhicules ferroviaires pour les soutenir et les guider, sont alors dépourvues de revêtement compressible d'étanchéité, c'est-à-dire ne peuvent être étanchéifiées vis-à-vis des rails qu'au moyen de pâte à luter, qui crée certes une étanchéité mais définit un contour moins précis qu'un revêtement compressible pour le métal de soudure en cours de solidification ; ceci reste cependant sans conséquence puisque, en tout état de cause, on prévoit toujours au dessus et sur les côtés des champignons des rails un excès de métal de soudure, que l'on usine ensuite pour y aligner la soudure avec les rails, en arasant ainsi en outre toute bavure éventuelle de métal de soudure, aux fins d'assurer au roulement et au guidage des roues la régularité requise dans un souci de réduction de l'usure et des bruits ainsi que de préservation du confort de roulement.

L'enlèvement sélectif du matériau réfractaire rigide constitutif du moule, dans la partie des portées d'appui correspondant au dessus du champignon des rails, peut aisément s'effectuer par abrasion, par exemple à la lime, surtout si ce matériau est un sable aggloméré, d'une façon connue en elle-même.

Cet enlèvement peut en outre être facilité si, selon un mode de réalisation préféré du moule selon l'invention, celui-ci présente un amincissement localisé de chaque portée d'appui dans sa partie correspondant au dessus du champignon du rail correspondant. En outre, pour permettre de maîtriser au mieux l'épaisseur de matériau réfractaire rigide ainsi enlevée, mesurée à partir de la partie de la portée d'appui correspondant au dessus du champignon du rail correspondant, on peut avantageusement prévoir que le moule selon l'invention comporte des repères d'enlèvement sélectif le long des parties de chaque portée d'appui correspondant au dessus du champignon du rail correspondant.

On peut combiner ces deux dispositions avantageuses, de façon particulièrement simple, en prévoyant que les dits repères d'enlèvement sélectif soient constitués par des gradins dans le dit amincissement localisé.

Comme le comprendra aisément un Homme du métier, un moule selon l'invention peut être aisément adapté, avec création des étanchéités requises à l'encontre d'un passage du métal de soudure à l'état liquide, sur des rails dont le champignon est considérablement plus usé qu'il n'est compatible avec les moules du type indiqué en préambule, tels qu'exploités actuellement par la Demanderesse, avec préservation des avantages liés à la présence d'un revêtement compressible d'étanchéification sur les portées d'appui. On peut ainsi souder entre eux sans difficulté, au moyen d'un moule selon l'invention, des rails dont le champignon présente une usure allant jusqu'à 15 millimètres, dans le sens de la hauteur, ce qui constitue le maximum actuellement admis pour des raisons de sécurité, étant entendu que l'on pourrait concevoir un moule selon l'invention susceptible d'être adapté à des rails dont le champignon serait encore plus usé.

La présence du revêtement compressible d'étanchéification sur les parties des deux portées d'appui autres que leurs parties correspondant aux côtés et au dessus du champignon des rails permet de compenser sans difficulté une légère différence d'usure entre les champignons des deux rails à souder, à savoir par exemple une différence d'usure allant jusqu'à trois millimètres environ en épaisseur, même si, selon un premier mode de réalisation d'un moule selon l'invention, les deux portées d'appui sont mutuellement symétriques par rapport à un plan destiné à coïncider au moins approximativement avec un plan transversal moyen de symétrie entre les deux abouts de rail.

Un tel mode de réalisation d'un moule selon l'invention peut être utilisé chaque fois que la différence d'usure entre les champignons des deux rails à souder entre eux est suffisamment faible pour pouvoir être compensée par une différence de compression du revêtement compressible d'étanchéification de l'appui des portées du moule contre les rails, et ceci sans perte d'étanchéité. On considérera ici qu'une usure est, respectivement, faible ou forte selon qu'elle peut être ou non ainsi compensée, sans perte d'étanchéité, par une différence de compression dans le revêtement compressible d'étanchéification.

On peut cependant également prévoir un deuxième mode de réalisation d'un moule selon l'invention se prêtant à des différences d'usure supérieures entre les champignons des deux rails, à savoir par exemple des différences d'usure allant de trois à sept millimètres, trop fortes pour être compatibles avec un moule présentant la symétrie caractéristique du premier mode de réalisation précité.

A cet effet, ce deuxième mode de réalisation d'un moule selon l'invention se caractérise en ce que les parties des deux portées d'appui correspondant au dessus et aux côtés du champignon des rails sont mutuellement symétriques par rapport à un plan destiné à coïncider au moins approximativement avec un plan transversal moyen de symétrie entre les deux abouts de rail et en ce que les parties des portées d'appui correspondant au dessous, aux côtés et au dessus du patin, aux côtés de l'âme et au dessous du champignon, respectivement de part et d'autre dudit plan, sont mutuellement dissymétriques par rapport à celui-ci, par différence d'espacement par rapport à la partie de la portée d'appui respective correspondant au dessus du champignon du rail correspondant.

Ainsi, un moule selon l'invention permet de conserver les avantages du revêtement compressible d'étanchéification sur les parties des portées d'appui qui correspondent au dessous, aux côtés et au dessus du patin, ainsi qu'aux côtés de l'âme et au dessous du champignon, c'est-à-dire à des parties des rails et de la soudure qui n'entrent jamais au contact des roues des véhicules ferroviaires et dans lesquelles la soudure peut donc conserver l'aspect brut qui lui a été conféré par l'empreinte de moulage, en ne perdant ces avantages que dans des parties des portées d'appui correspondant aux côtés et au dessus du champignon, c'est-à-dire à des parties des rails et de la soudure qui seront de toute façon usinées ensuite, pour assurer la soudure de rails non seulement fortement usés mais également présentant une différence sensible d'usure.

En pratique, le nombre de moules dont il est nécessaire de disposer pour répondre à toutes les situations qui peuvent se présenter lorsqu'on doit procéder à la soudure de deux rails peut être limité à trois, à savoir un moule du type actuellement exploité par la Demanderesse, si l'usure des rails est faible et par exemple inférieure à trois millimètres dans le sens de la hauteur, et deux moules selon l'invention, conformes respectivement au premier et au deuxième des modes de réalisation précités, si l'usure est plus forte, par exemple dans la limite de 15 millimètres dans le sens de la hauteur, et selon que, respectivement, la différence d'usure des deux rails dans le sens de la hauteur est faible, par exemple inférieure à 3 millimètres, ou forte, par exemple comprise entre 3 et 7 millimètres, ces valeurs n'étant indiquées qu'à titre d'exemples non limitatifs.

Outre les dispositions caractéristiques de la présente invention, un moule selon l'invention peut présenter par ailleurs toute conception connue et, en particulier, dans un moule selon l'invention comme dans un moule de l'art antérieur, de façon actuellement préférée :
- les dites pièces constitutives du moule peuvent avantageusement comporter deux pièces destinées à être placées respectivement de part et d'autre de chaque rail, mutuellement symétriques par rapport à un plan destiné à coïncider au moins approximativement avec un plan longitudinal moyen de symétrie respective des deux abouts de rail et constituant des parties respectives des dites portées correspondant aux côtés et au dessus du patin des rails, aux côtés de l'âme, et au dessous , aux côtés et au dessus du champignon des rails, et
- les dites pièces peuvent avantageusement comporter en outre une troisième pièce, destinée à être placée en dessous de chaque rail et constituant des parties des dites portées correspondant au dessous du patin des rails.

Ce sont, naturellement, ces pièces qui présentent respectivement la symétrie ou la dissymétrie correspondant aux premier et deuxième modes de réalisation précités d'un moule selon l'invention.

Ces pièces peuvent par ailleurs présenter toute disposition connue, par exemple des dispositions propres à définir un canal de coulée du métal de soudure à l'état liquide dans l'empreinte, débouchant d'une part vers le haut dans une face supérieure du moule et d'autre part vers le bas dans une zone supérieure de l'empreinte, et / ou au moins une pipe de remontée de gaz et de métal de soudure à l'état liquide, débouchant d'une part, vers le haut dans la dite face supérieure du moule et d'autre part vers le bas dans une zone inférieure de l'empreinte ainsi que, le cas échéant, latéralement à un niveau intermédiaire de celle-ci, correspondant au niveau du champignon des rails.

D'autres caractéristiques et avantages d'un moule selon l'invention ressortiront de la description ci-dessous, relative à deux exemples non limitatifs de réalisation, ainsi que des dessins annexés qui accompagnent cette description.

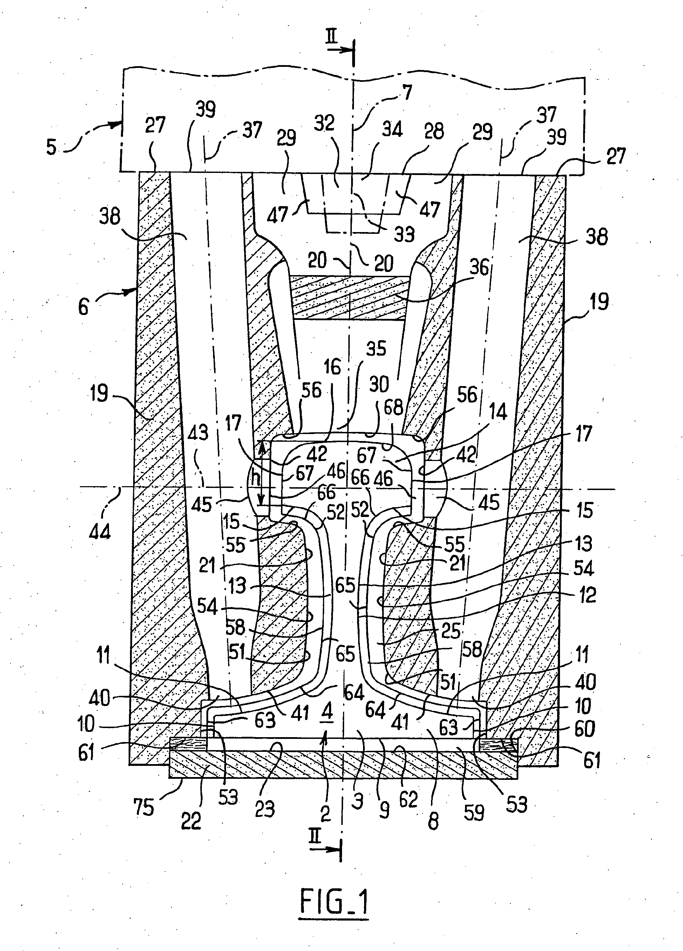

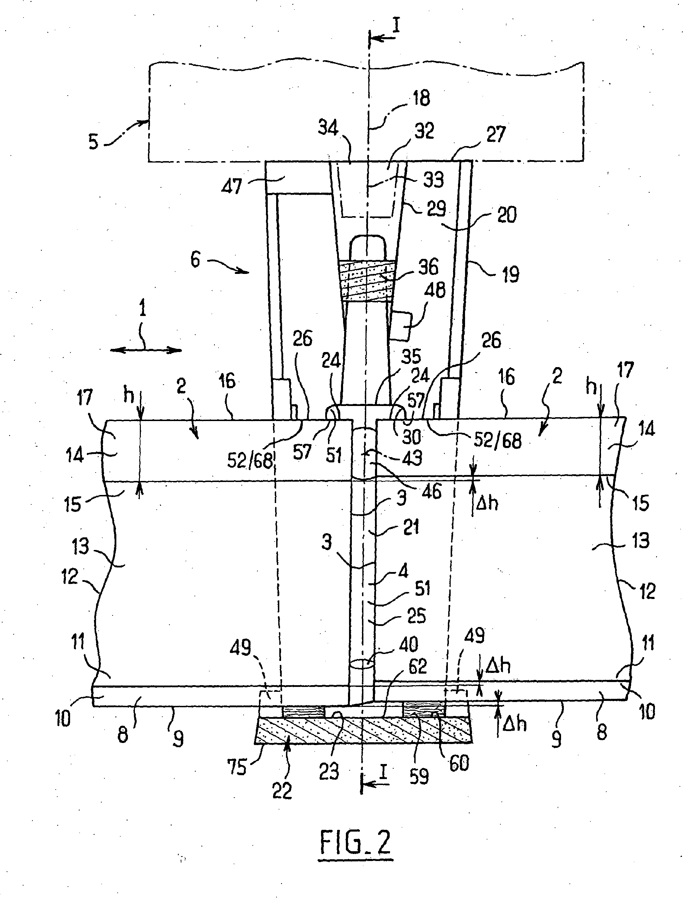

La figure 1 montre une vue d'un moule selon l'invention, plus particulièrement adapté à la soudure de rails dont les champignons, plus ou moins fortement usés, par exemple dans la limite de 15 millimètres dans le sens de la hauteur, présentent une différence d'usure relativement faible, par exemple d'un maximum de 3 millimètres dans le sens de la hauteur, ce moule comportant trois pièces, selon le mode de réalisation actuellement préféré, directement inspiré à cet égard du mode de réalisation des moules de l'Art antérieur, et étant vu à l'état assemblé sur les abouts de deux rails de chemin de fer à souder entre eux et en coupe par un plan transversal de symétrie entre ces deux abouts, tel que repéré en I-I à la figure 2.

La figure 2 montre une vue de ce moule en coupe par un plan longitudinal de symétrie commun aux deux rails, quant à eux représentés en élévation, et repéré en II-II à la figure 1.

La figure 3 montre, en une vue en élévation similaire à celle de la figure 2, l'une des deux pièces constituant dans ce mode de réalisation des moitiés supérieures du moule.

Les figures 4 et 5 montrent des vues en perspective de la même pièce du moule, respectivement dans son ensemble par un côté de cette pièce et sous forme d'un détail agrandi par le côté opposé de celle-ci.

La figure 6 illustre, dans une vue en coupe similaire à celle de la figure 2, un moule selon l'invention comportant également trois pièces, mais plus particulièrement adapté à la soudure de rails dont les champignons, plus ou moins fortement usés, par exemple dans la limite précitée de 15 millimètres dans le sens de la hauteur, présentent une différence d'usure relativement forte, par exemple de l'ordre de 3 à 7 millimètres, dans le sens de la hauteur.

La figure 7 montre, en une vue en élévation similaire à celle de la figure 6, l'une des deux pièces constituant dans ce mode de réalisation les moitiés supérieures du moule.

La figure 8 montre un détail central de la figure 7, à plus grande échelle.

La figure 9 montre une vue éclatée, en perspective, de la même pièce du moule.

On considère ici comme référence de longitudinalité une direction 1 que les deux rails 2 assemblés mutuellement par soudure présentent au moins à proximité immédiate des abouts 3 à souder mutuellement, qu'ils présentent l'un vers l'autre à cet effet et qui forment entre eux, comme il est bien connu en soi, un intervalle continu 4, de valeur longitudinale déterminée, destiné à être comblé par un métal de soudure fourni, à l'état liquide, par réaction aluminothermique à l'intérieur d'un creuset 5 dont la nature est indifférente au regard de la présente invention mais qui peut par exemple être du type commercialisé par la Demanderesse sous la dénomination « creuset jetable », destiné à un usage unique et par exemple posé directement sur le moule 6 selon l'invention, d'une façon connue en elle-même, décrite dans le brevet européen n° 0 407 240 auquel on se réfèrera à cet égard.

Dans les deux modes de réalisation qui ont été illustrés et vont être décrit à présent, le moule 6 selon l'invention est adapté à la soudure mutuelle de rails 2 de type Vignole, présentant une symétrie respective par rapport à un plan longitudinal 7 qui se confond avec le plan de coupe II-II, au moins de façon localisée à proximité des abouts 3, mais il est bien entendu que l'on pourrait également réaliser conformément à la présente invention des moules destinés à la soudure d'autres types de rails, et par exemple des rails à gorge destinés à être encastrés dans une chaussée, et un Homme du métier apportera sans difficulté, aux dispositions qui vont être décrites à présent, les modifications à apporter au moule 6 qui' va être décrit pour l'appliquer à la soudure de différents autres types de rails.

On rappellera qu'un rail Vignole comporte trois parties longitudinales, respectivement symétriques par rapport au plan 7 et réalisées d'une seule pièce, à raison :
- d'un patin plat 8 d'orientation générale perpendiculaire au plan 7, délimité par une face inférieure plane ou dessous 9, qui coupe perpendiculairement le plan 7, par deux chants plans 10 approximativement parallèles au plan 7 et mutuellement symétriques par rapport à celui-ci, et par deux demi-faces supérieures ou dessus 11 concaves, mutuellement symétriques par rapport au plan 7 et raccordées chacune au dessous 9 du patin par un chant 10 respectif,
- d'une âme plate 12 disposée suivant le plan 7, au-dessus du patin 8, et délimitée respectivement de part et d'autre du plan 7 par des faces latérales 13 approximativement planes, approximativement parallèles au plan 7 et mutuellement symétriques par rapport à celui-ci, chacune de ces faces 13 se raccordant vers le bas à une demi-face supérieure ou dessus 11 respective du patin 8, et
- d'un champignon 14 de section approximativement rectangulaire, oblongue perpendiculairement au plan 7 et définie par deux demi-faces inférieures ou dessous 15, concaves, mutuellement symétriques par rapport au plan 7 et à chacune desquelles l'une, respective, des faces latérales 13 de l'âme 12 se raccorde vers le haut, par une face supérieure ou dessus 16 plate, légèrement convexe, coupant le plan 7 approximativement perpendiculairement à celui-ci et constituant une surface de roulement pour des véhicules ferroviaires, et par deux chants 17, approximativement plans, approximativement parallèles au plan 7 et mutuellement symétriques par rapport à celui-ci, chacun de ces chants 17 raccordant la face 16 à l'une, respective des demi-faces inférieures ou dessous 15.

Les notions de dessus et de dessous s'entendent ici par référence à une position de service des rails 2, dans laquelle le plan 7 présente une orientation approximativement verticale et qui constitue l'orientation dans laquelle s'effectue la soudure.

Le détail de la section transversale d'un tel rail 2 est bien connu en lui-même d'un Homme du métier, et ne sera de ce fait pas décrit davantage.

On observera que l'usure des deux rails, au fur et à mesure du passage des trains, concerne essentiellement la face supérieure ou dessus 16 du champignon 14, dont la dimension ou hauteur h, mesurée perpendiculairement à la face inférieure 9 au dessous du patins 8, par exemple entre l'intersection de la face supérieure ou dessus 16 du champignon 14 et une arête de raccordement entre chaque chant 17 de celui-ci et la demi-face inférieure ou dessous 14 correspondante diminue ainsi progressivement mais qui conserve au moins approximativement sa symétrie par rapport au plan 7.

En vue de leur soudure mutuelle, de façon également connue en elle-même, les abouts 3 des deux rails 2 sont dressés, par exemple à la tronçonneuse, pour être plats et perpendiculaires au plan 7, et placés face à face, dans une relation de parallélisme mutuel et, si les hauteurs h sont identiques pour les deux rails 2, de façon non illustrée, de symétrie mutuelle par rapport à un plan transversal 18 qui se confond avec le plan de coupe I-I, en respectant l'intervalle 4 précité, dans lequel on coule le métal de soudure à l'état liquide, en provenance du creuset 5, avant de laisser ce métal de soudure se solidifier pour réaliser la soudure. Si les hauteurs h sont différentes, en raison par exemple d'une usure différente des deux rails 2, dont l'un peut être neuf et l'autre usé, ou qui peuvent provenir de lieux différents d'utilisation antérieure, comme on l'a illustré, on conserve ce parallélisme mutuel et une identité de position des deux abouts 3 par rapport au plan 18, mais leur symétrie mutuelle n'est conservée qu'au niveau de la face supérieure ou dessus 16 des champignons 14, dont on aligne longitudinalement les faces supérieures ou dessus 16, alors que les demi-faces inférieures 15 des champignons 14, les âmes 12 et les patins 8 sont décalés mutuellement, dans le sens de la hauteur, de la différence Δh entre les hauteurs h respectives.

Le moule 6, de façon connue en elle-même, a pour rôle de retenir le métal ainsi coulé alors qu'il se présente encore à l'état liquide, et de le conformer de façon recherchée au fur et à mesure de sa solidification.

De façon également connue en elle-même, ce moule 6 est constitué, dans ses deux modes de réalisation illustrés, de trois pièces principales, à savoir en particulier de deux pièces ou moitiés supérieures 19, approximativement identiques, respectivement symétriques approximativement par rapport au plan 18 et mutuellement symétriques par rapport au plan 7, le long duquel elles sont mutuellement jointives par une face plane 20 respective au-dessus du champignon 14 des rails 2 et de la partie correspondante de l'intervalle 14, alors que chacune d'entre elles présente en dessous de cette face 20, vers le plan 7, une face respective 21 conformée, d'une façon qui sera détaillée par la suite, pour envelopper chacun des deux rails, à proximité des abouts 3, et l'intervalle 4 dans des zones correspondant aux faces, demi-faces ou chants 16, 17, 15, 13, 11, 10, c'est-à-dire de toutes parts jusqu'au niveau de la face inférieure 9 du patin 8 et à l'exception de cette face inférieure 9, respectivement de part et d'autre du plan 7, par rapport auquel les faces 21 sont mutuellement symétriques.

En regard de cette face inférieure 9, les deux pièces ou moitiés supérieures 19 sont complétées par une troisième pièce, ou pièce de fond, 22, présentant la forme générale d'une plaque perpendiculaire au plan 7 et délimitée vers le haut par une face supérieure 23 conformée, d'une façon qui sera détaillée par la suite, de façon à longer la face inférieure 9 du patin 8 des deux rails à proximité des abouts 3, ainsi qu'en regard de la zone correspondante de l'intervalle 4, et à se raccorder, dans le sens d'un éloignement par rapport au plan 7, à la limite inférieure de chacune des faces 21 pour délimiter avec ces dernières, autour de l'intervalle 4 et d'une zone respective 24 de chaque rail 2, directement adjacente à son about 3, une empreinte de moulage 25 fermée de façon étanche au métal de soudure à l'état liquide, à des exceptions qui seront décrites par la suite, par appui continu des faces 21 et 23 contre les deux rails 2, dans des conditions qui seront décrites par la suite, dans une zone 26 respective de ces rails 2 située longitudinalement à l'opposé de l'about 3 correspondant par rapport à la zone 24 précitée, logée à l'intérieur de l'empreinte de moulage 25.

Chacune des pièces 19 et 22 présente par ailleurs une forme indifférente au regard de la présente invention, cette forme s'inscrivant par exemple dans un parallélépipède rectangle respectif mais définissant de préférence, par une face supérieure plane respective 27 de chacune des pièces ou moitiés supérieures 19, perpendiculaire au plan 18 et approximativement perpendiculaire au plan 7, une face supérieure 28 du moule 6, propre à porter directement le creuset 5 conformément aux enseignements du brevet européen précité de la Demanderesse ; à cet effet, comme il est décrit dans ce brevet européen auquel on se réfèrera avantageusement, les deux faces 27 forment entre elles un dièdre d'angle d'une valeur différente de 180° dans un but d'auto-centrage du creuset 5, conformé de façon complémentaire. Ces dispositions sont bien connues en elles-mêmes, et ne seront de ce fait pas décrites davantage.

De façon également connue en elle-même, chacune des moitiés supérieures 19 du moule 6 est creusée, dans ses faces 20 et 27 ainsi que dans une zone supérieure 30 de sa face 21, correspondant à la face supérieure ou dessus 16 du champignon 14 des rails 2 et à la zone correspondante de l'intervalle 4, d'une moitié respective 29 d'un canal 32 de coulée du métal de soudure à l'état liquide, en provenance du creuset 5, vers l'empreinte de moulage 25. Chacune des moitiés 29 étant approximativement symétrique par rapport au plan 18 et ces deux moitiés 29 étant mutuellement symétriques par rapport au plan 7, le canal 32 présente une symétrie d'ensemble par rapport à un axe 33 défini par l'intersection de ces plans 18 et 7, et débouche ainsi suivant cet axe 33, d'une part vers le haut dans la face supérieure 27 et d'autre part vers le bas dans la zone 30 des faces 21, par une embouchure respectivement supérieure 34 et inférieure 35, l'une et l'autre d'axe 33.

La conformation du canal 32 reste identique, dans un moule 6 selon l'invention, à ce qu'elle est dans les moules de l'Art antérieur et ne sera de ce fait pas davantage détaillée. De façon avantageuse, également connue en elle-même, les moitiés 29 du canal 32 sont conformées de façon à pouvoir recevoir et immobiliser, à un niveau intermédiaire entre les niveaux respectifs des embouchures 34 et 35, une pièce supplémentaire ou bouchon 36 réalisée comme les pièces 19 et 22 en un matériau réfractaire tel qu'un sable aggloméré, pour constituer à l'intérieur du canal 32 une chicane propre à éviter une chute directe du métal de soudure à l'état liquide, suivant l'axe 33, jusqu'à l'empreinte de moulage 25, et il est bien entendu que d'autres dispositions pourraient être choisies sans que l'on sorte pour autant du cadre de la présente invention.

De même, de façon connue en elle-même, chacune des pièces ou moitiés supérieures 19 du moule 6 est creusée, à l'opposé du plan 7 par rapport à la moitié 29 correspondante du canal 32, suivant un axe respectif 37 situé dans ce plan 18 mais se rapprochant du plan 7 vers le bas, d'une pipe tubulaire respective 38 qui débouche d'une part vers le haut, par une embouchure supérieure 39, dans la face supérieure 27 respective et d'autre part vers le bas, par une embouchure inférieure 40, dans une zone 41 de la face 21 respective située en regard d'une demi face supérieure ou dessus 11 correspondante du patin 8. De plus, selon un mode de réalisation préféré, chacune des pipes 38 débouche, à un niveau intermédiaire entre les niveaux respectifs de son embouchure supérieure 39 et de son embouchure inférieure 40, dans une zone 42 de la face 21 respective située en regard d'un chant 17 respectivement correspondant du champignon 14. A cet effet, suivant un même axe 43 perpendiculaire au plan 7 et situé dans un plan 44 perpendiculaire aux plans 7 et 18, entre chaque pipe 38 et la zone 42 de la face 21 de la même pièce ou moitié supérieure 19 est aménagé un passage tubulaire respectif 45 débouchant dans la zone 42 correspondante par une embouchure respective 46, ou embouchure latérale.

Ces dispositions sont également bien connues d'un Homme du métier et ne seront pas décrites davantage. De façon générale, les moitiés supérieures 19 et la pièce de fond 22 du moule 6 selon l'invention peuvent encore présenter d'autres dispositions bien connues en elles-mêmes, mais indifférentes au regard de la présente invention, telles que des découpes 47 aménagées dans la face supérieure 27 pour autoriser l'évacuation du corindon produit par la réaction aluminothermique, en fin de coulée du métal de soudure à l'état liquide, des passages 48 de circulation du métal de soudure à l'état liquide entre chacune des pipes 38 et la moitié correspondante 29 du canal 32, à un niveau intermédiaire entre les niveaux respectifs du bouchon 36 et de l'embouchure inférieure 35 du canal 32, dans chacune des moitiés supérieures 19, ou encore des protubérances 49 en saillie sur la face 23 de la pièce de fond 22 pour faciliter le positionnement mutuel des trois pièces 19 et 22 en s'emboîtant autour des moitiés supérieures 19, respectivement de part et d'autre de chacune dans le sens d'un éloignement par rapport au plan 18.

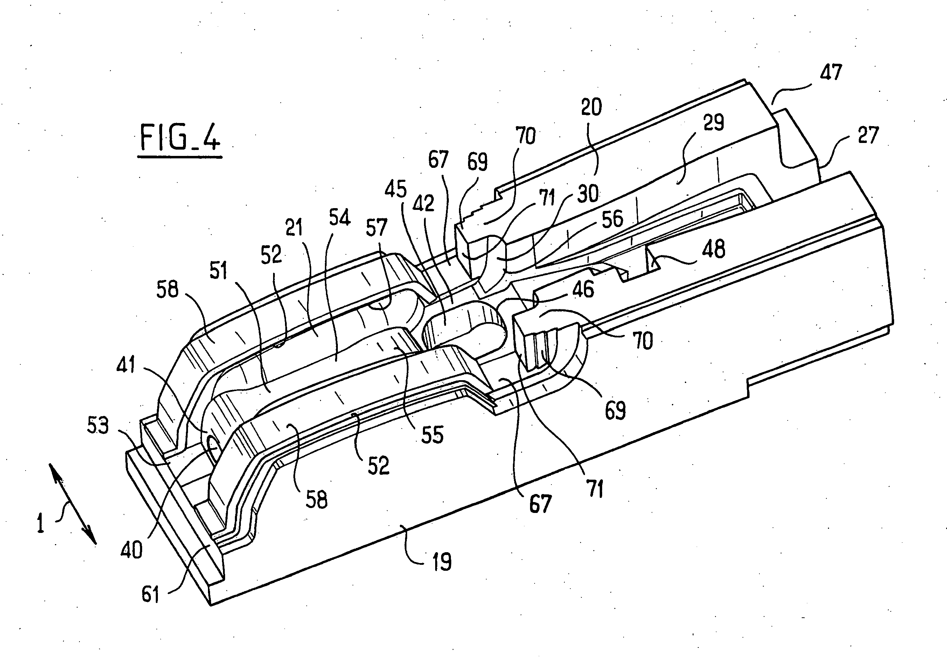

Dans le mode de réalisation du moule 6 selon l'invention qui a été illustré aux figures 1 à 5, auxquelles on se référera à présent, les faces 21 et 23, qui définissent l'empreinte de moulage 25, conservent elles-mêmes leur conformation connue, selon laquelle, dans tout plan transversal de coupe, tel que le plan I-I, elles présentent un contour complémentaire de celui des faces, demi-faces ou chants respectivement correspondants d'un rail 2, augmenté d'un jeu d'espacement mutuel qui peut varier suivant ces faces, demi-faces ou chants, d'une part, et varie en direction longitudinale de façon à être plus faible en regard des zones 26 des rails 2 qu'entre ces zones, à savoir en regard des zones 24 et autour de l'intervalle 4, d'autre part.

Ainsi, en ce qui concerne les moitiés supérieures 19 du moule 6, la face 21 présente une section concave, définie par une partie de surface 51 concave, présentant par exemple un contour en U plus ou moins ouvert, en regard des zones 24 des rails 2 et autour de l'intervalle 4, dans la zone 42, et il en est de même dans les autres zones de la face 21, à savoir sa zone 41 précitée, correspondant à la demi face supérieure ou dessus 11 du patin 8 du rail, une zone 53 située en regard du chant 10 correspondant, une zone 54 placée en regard de la face latérale 13 correspondante de l'âme 12, une zone 55 située en regard de la demi-face inférieure ou dessous 15 correspondante du champignon 14 et une zone 56 correspondant à une partie marginale, correspondant à ce chant 17, de la face supérieure ou dessus 16 du champignon 14, bordant l'embouchure inférieure 35 du canal 32 dans le sens d'un éloignement par rapport au plan 7.

La partie de surface 51, dans ce mode de réalisation, est symétrique par rapport au plan 18 et, dans le sens d'un éloignement par rapport à celui-ci, se raccorde par une arête respective 57, sous un angle qui peut varier suivant les parties, à deux autres parties 52 de surface, dont chacune constitue une partie d'une portée d'appui de la face 21 contre la zone 26 d'un rail 2 respectivement correspondant. Dans leur section, les parties de surface 52 sont rectilignes, perpendiculaires au plan 18 et colinéaires, et la partie de surface 51 forme entre elles un creux plus ou moins prononcé suivant les zones de la face 21. Dans le mode de réalisation du moule 6 selon l'invention illustré aux figures 1 à 5 comme dans les moules de l'Art antérieur, les parties de surface 52 sont ainsi mutuellement symétriques par rapport au plan 18.

D'une façon connue en elle-même, les parties de surface 52 prennent appui de façon continue contre la zone 26 du rail 2 correspondant non pas directement, mais par l'intermédiaire d'un revêtement 58 réfractaire, suffisamment compressible pour épouser au mieux la zone 26 correspondante et assurer ainsi une étanchéité, autour de l'empreinte 25, à l'encontre d'une fuite du métal de soudure à l'état liquide.

Conformément à la présente invention, ce revêtement 58 est cependant limité à des zones 63, 64, 65 et 66 des parties de surface 52 qui, comme les zones 53, 41, 54 et 55 des parties de surface 51, correspondant aux chants 10 et aux demi-faces supérieures ou dessus 11 du patin 8 des rails 2, aux côtés 13 de leur âme 12 et aux demi-faces inférieures ou dessous 15 du champignon 14 des rails 2, alors que le matériau réfractaire rigide constitutif des pièces ou moitiés 19 s'appuie directement contre les côtés 17 et la face supérieure ou dessus 16 des champignons 14, vis-à-vis desquels une étanchéité au métal de soudure à l'état liquide est assurée au moyen de pâte à luter appliquée sur site, de façon connue en elle-même, dans des zones 67 et 68 des parties de surface 52 respectivement correspondantes.

De même, la face supérieure 23 de la pièce de fond 22 porte de façon solidaire, entre les protubérances 49, un revêtement 59 en tout point similaire au revêtement 58.

Plus précisément, la face 23 est plane, dans le mode de réalisation du moule 6 illustré aux figures 1 à 5 comme dans l'Art antérieur, et elle présente une partie périphérique de surface 60 plane, qui vient en appui d'une part contre un épaulement plan 61, perpendiculaire aux plans 18 et 7 et tourné vers le bas, que chacune des moitiés supérieures 19 présente et qui se raccorde vers le plan 7 à la zone 53 de la face 21 correspondante, et d'autre part contre la face inférieure 9 du patin 8 des deux rails 2, dans la zone 26 respectivement correspondante.

Cette partie périphérique plane 60 entoure de toutes parts une partie de surface 62, également plane, de la face 23, laquelle partie de surface 62 est placée en regard de la face inférieure 9 du patin 8 des deux rails 2, dans leurs zones 24, et de l'intervalle 4, en dessous de celui-ci, pour y délimiter l'empreinte du moulage 25.

Le revêtement 59 s'étend de façon continue sur la totalité de la partie de surface 60, tout autour de la partie de surface 62, pour créer une étanchéité de contact avec la face inférieure 9 des deux rails 2, dans leurs zones 26, ainsi qu'avec le revêtement 58 de la zone 53 de chaque face 21, le revêtement 59 s'étendant de préférence jusqu'entre la partie périphérique 60 de la face 23 et chacun des épaulements 61.

L'empreinte 25 est ainsi fermée de façon étanche, dans les zones 63, 64, 65 et 66 des parties de surface 52 et dans la partie périphérique 60 de la face 23, par les revêtements 58 et 59, dont la compressibilité autorise une certaine tolérance de positionnement, dans le sens de la hauteur, par rapport à la face inférieure ou dessous 9, aux chants 10 et aux demi-faces supérieures ou dessus 11 du patin 8 de chacun des rails 2, et par rapport aux côtés 13 de leur âme et aux demi-faces inférieures 15 de leur champignon, tant en procurant l'étanchéité requise à l'encontre d'un passage du métal de soudure à l'état liquide.

Ainsi, à titre d'exemple non limitatif, pour une valeur de l'ordre de 5 millimètres de l'épaisseur e des revêtements 58 et 59 considérés au repos, c'est-à-dire à l'état non comprimé, on peut admettre sans perte d'étanchéité un décalage Δh pouvant aller jusqu'à 3 millimètres, dans le sens de la hauteur, entre la face inférieure ou dessous 9 du patin 8 de l'un des rails 2 et la face inférieure 9 du patin 8 de l'autre rail 2, ce qui se traduit par un décalage Δh identique des côtés 13 de leur âme 12 et des demi-faces inférieures ou dessous 15 de leur champignon 14, pour compenser une différence de même valeur Δh entre les valeurs des hauteurs respectives h des deux champignons 14, en raison d'une différence d'usure de ces champignons 14, pour conserver un alignement longitudinal de leurs deux faces supérieures 16, comme on l'a illustré à la figure 2.

Dans la mesure où, comme il est connu, l'usure du champignon 14 des rails 2 ne se traduit généralement que par une infime réduction des dimensions qu'il présente entre ses chants 17, perpendiculairement au plan 7, un dimensionnement adéquat, en écartement, entre le plan géométrique des faces 20 des moitiés supérieures 19 du moule 6 et les zones 67 des parties de surface 52 à la fabrication de ces moitiés supérieures 19 et un soin convenable apporté au lutage permettent d'obtenir une étanchéité au niveau de ces zones 67 et des chants 17 du champignon 14 des deux rails 2 dans toutes les conditions d'usure généralement admises de ces derniers, sans que l'on ait à retravailler les moitiés supérieures 19 du moule 6 à cet égard sur le site de soudure.

Par contre, le moule 6 conforme à la présente invention, en particulier dans son mode de réalisation illustré aux figures 1 à 5, présente des dispositions permettant d'adapter sa géométrie aux besoins, en termes de hauteur h du champignon 14 de chacun des rails 2, que cette hauteur h soit identique, de façon non illustrée, ou diffère de Δh comme on l'a illustré, par enlèvement sélectif de tout ou partie d'un excédent de matériau constitutif de chaque moitié supérieure 19 du moule 6, prévu à cet effet, à la fabrication de cette moitié 19 de moule, dans des zones localisées de celle-ci destinées à constituer une moitié respective de chacune des zones 68.

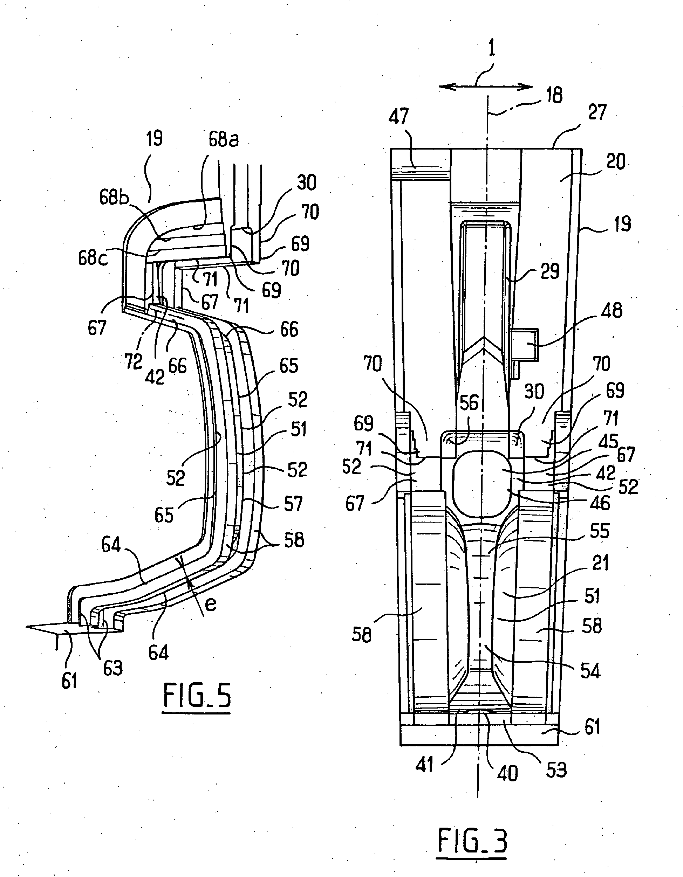

Les figures 3 à 5 montrent une moitié supérieure 19 de moule telle qu'elle sort de fabrication et telle qu'elle se présente avant adaptation, sur site, à deux rails 2 à souder entre eux.

Il en ressort que cette moitié 19, comme l'autre moitié 19, présente la conformation définitive de ses faces 20, de l'intégralité de ses parties de surface 51 destinées à délimiter une partie de l'empreinte du moulage 25 et des zones 63, 64, 65, 66 de ses parties de surface 52, lesquelles zones 63, 64, 65, 66 portent solidairement le revêtement compressible 58 d'étanchéité correspondant, et qu'une partie, adjacente à chaque zone 66, de la zone 67 respectivement correspondante présente sa conformation plane définitive, parallèle au plan géométrique de la face 20. Par contre, si l'on considère une zone théorique 68a chaque partie de surface 52 qui correspondrait à une zone 68 adaptée, par complémentarité de forme, à la face supérieure ou dessus 16 du champignon 14 d'un rail neuf, présentant la valeur maximale possible de h, la moitié 19 illustrée du moule 6, comme l'autre moitié 19 non illustrée à l'état neuf, présente en saillie sous cette zone 68a, vers la zone 66 respectivement correspondante, un voile 69 plat, parallèle au plan 18 par rapport auquel les deux voiles 69 sont mutuellement symétriques de façon à délimiter entre eux un prolongement, non référencé, de la moitié correspondante 29 du canal de coulée 32, chacun des voiles 69 étant réalisé en une seule pièce avec la moitié 19 correspondante du moule 6, dans le même matériau réfractaire rigide tel qu'un sable aggloméré.

Chacun des voiles 69 est ainsi délimité par un prolongement coplanaire 70 respectif de la face 20 et, vers la zone 66 respectivement correspondante, par un chant 71 respectif plan, perpendiculaire aux plans 7 et 18, les deux chants 71 étant mutuellement coplanaires et présentant un même espacement hₘᵢₙ dans le sens de la hauteur, parallèlement au plan 7, par rapport au raccordement 72 du revêtement 58, considéré à l'état comprimé au maximum dans des conditions normales d'utilisation, comme on l'a schématisé en trait mixte à la figure 5, avec la zone 67 correspondante. Cet espacement hₘᵢₙ est au plus égal, à savoir de préférence légèrement inférieur, à la plus petite valeur possible de h, dans les conditions d'usure admissibles du champignon 14 d'un rail 2.

De préférence, perpendiculairement au plan 18, les voiles 69 présentent une épaisseur non référencée inférieure à celle des parties avoisinantes de la moitié 19 correspondante du moule 6, de façon à constituer un affaiblissement mécanique permettant d'en enlever aisément, par exemple à la lime, une quantité de matière juste suffisante pour y aménager, avec la géométrie requise, la zone 68 destinée à s'adapter à la face supérieure ou dessus 16 du champignon 14 d'un rail présentant, en raison de son usure, une valeur déterminée de h.

Pour faciliter cet enlèvement de matière, et augmenter sa précision, le désépaississement des voiles 69, par rapport aux parties avoisinantes de la moitié 19 de moule 6 correspondantes, s'effectue par gradins, progressivement, vers le chant 71 correspondant. Ainsi, comme le montre en particulier la figure 5 et alors que chaque voile 69 est de préférence délimité vers le plan 18 par une face respective, non référencée, plane et parallèle à celui-ci, chaque voile 69 est délimité, dans le sens d'un éloignement par rapport au plan 18, par une autre face respective, également non référencée, constituée dans cet exemple de trois bandes planes, parallèles au plan 18 et formant à leur raccordement deux gradins 68b, 68c correspondant à deux positions priviligiées de zone 68 à réaliser, la zone 68a étant elle-même matérialisée par un troisième gradin. Dans l'exemple illustré, les gradins 68b et 68c sont parallèles au chant 71 et leurs raccordements avec le prolongement 70 de la face 20 de la moitié19 du moule sont équi-réparties, dans le sens de la hauteur, entre le raccordement de la zone 68a à la face 20 et le chant 71, mais d'autres conformations et d'autres dispositions pourraient naturellement être choisies sans que l'on sorte pour autant du cadre de la présente invention.

Un Homme du métier comprendra aisément comment on utilise un moule 6 selon l'invention conforme au mode de réalisation qui vient d'être décrit en référence aux figures 1 à 5.

Après avoir dressé les abouts 3, aligné mutuellement les faces supérieures ou dessus 16 des deux champignons 14 et convenablement calé leurs patins 8, et après avoir vérifié si le décalage Δh , par exemple au niveau de ces derniers, est compatible avec l'utilisation d'un moule 6 conforme à ce mode de réalisation, ou encore après avoir constaté qu'en raison d'une identité d'usure des champignons 14 et des deux rails 2, ce décalage Δh est nul, on enlève dans chacun des voiles 69 la quantité de matériau constitutif de chaque moitié supérieure 19 du moule juste nécessaire pour réaliser la zone 68 requise de chaque partie surface 52,en conférant à cette zone 68 une géométrie aussi complémentaire que possible de celle d'une moitié du dessus 16 du champignon 14 d'un rail 2 et de la partie de chaque chant 17 qui en est la plus proche, puis on met en place de façon traditionnelle sur les deux rails 2 les deux moitiés supérieures de moule 19 et la pièce de fond 22, que l'on fixe de façon traditionnelle. Si la valeur de Δh est différente de 0, les revêtements 58 et 59 se compriment différemment en regard de l'un et l'autre des rails 2 en assurant toutefois un appui mutuel continu d'étanchéité à l'encontre du métal de soudure à l'état liquide dans les zones 60, 63, 64, 65, 66, vis-à-vis du patin 8, de l'âme 12 et des demi-faces inférieures ou dessous 15 du champignon 14. En l'absence de différence d'usure Δh, c'est-à-dire de décalage par exemple entre les faces inférieures 9 des patins 8 des deux rails 2, les revêtements 58 et 59 sont comprimés de façon identique et assurent de façon identique l'étanchéité dans les mêmes zones 60, 63, 64, 65, 66. Dans les deux cas, cette étanchéité peut être ensuite complétée par un lutage qui, par contre, assure seul l'étanchéité entre chacune des zones 67 et 68 et le champignon 14 des rails 2.

La coulée du métal de soudure à l'état liquide peut ensuite être effectuée dans les conditions habituelles, à partir du creuset 5 avantageusement posé directement sur la face supérieure 28 du moule 6, puis l'ensemble du creuset et du moule 6 peut être enlevé par destruction dans les conditions décrites dans le brevet européen précité de la Demanderesse, ou encore d'une autre façon, connue en elle-même.

Un Homme du métier comprendra aisément que la présence des voiles 69 correspondant à un excédent de matériau constitutif de chaque moitié supérieure 19 du moule 6 permet, par un dimensionnement approprié dans le sens de la hauteur, de faire face à toute valeur admissible de h, c'est-à-dire à toute usure admissible des champignons 14, dès lors que la différence d'usure Δh reste suffisamment faible pour être absorbée, sans perte d'étanchéité, par une différence de compression des revêtements 58 et 59 respectivement de part et d'autre du plan 18.

Par contre, le mode de réalisation d'un moule 6 qui vient d'être décrit ne peut être utilisé si la différence d'usure Δh dépasse un seuil maximal compatible avec une telle absorption par différence de compression des revêtements 58 et 59 respectivement de part et d'autre du plan 18.

On a donc prévu un deuxième mode de réalisation d'un moule 6 selon l'invention, qui va être décrit à présent, pour faire face à des situations dans lesquelles la valeur de Δh dépasse ce seuil.

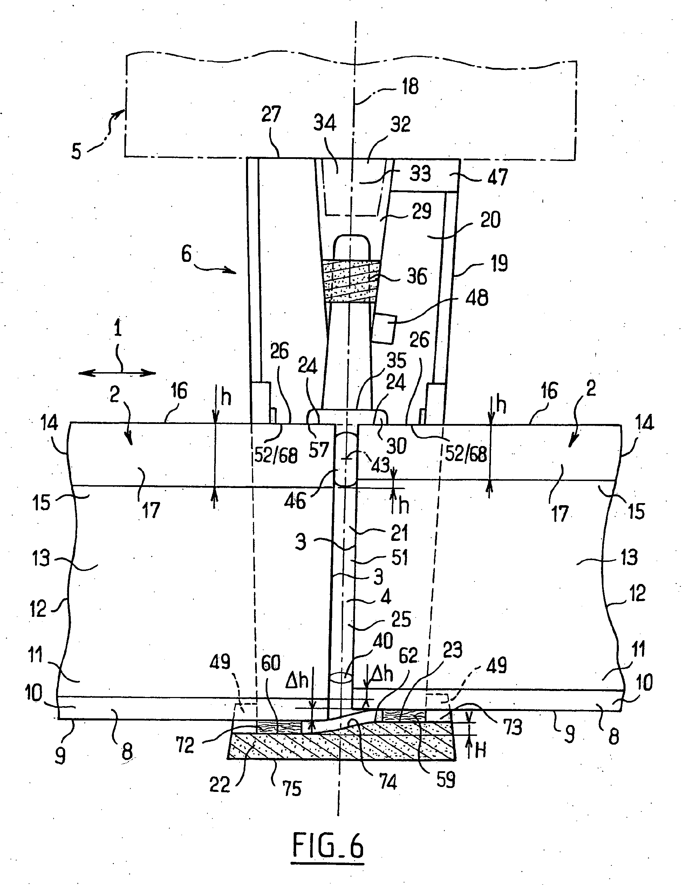

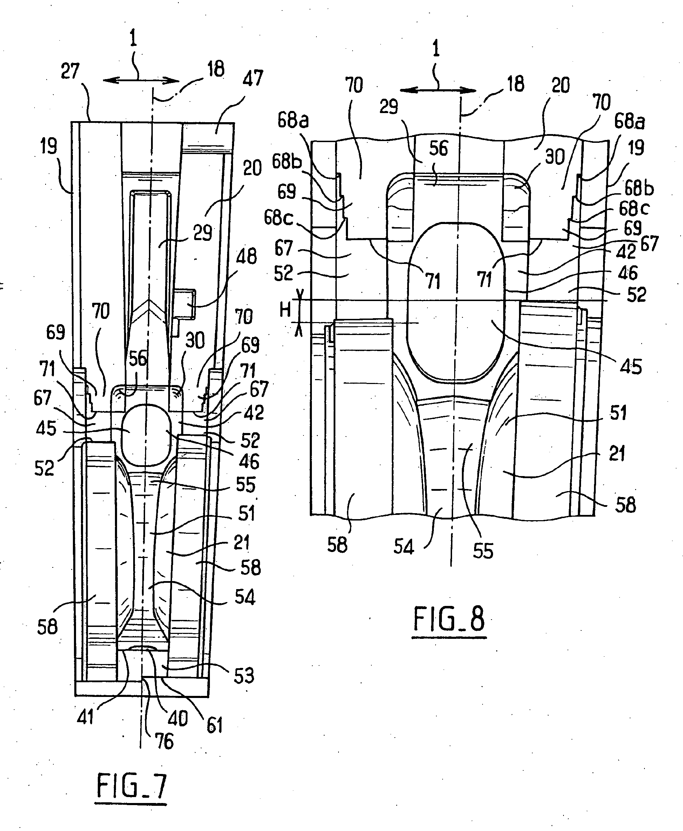

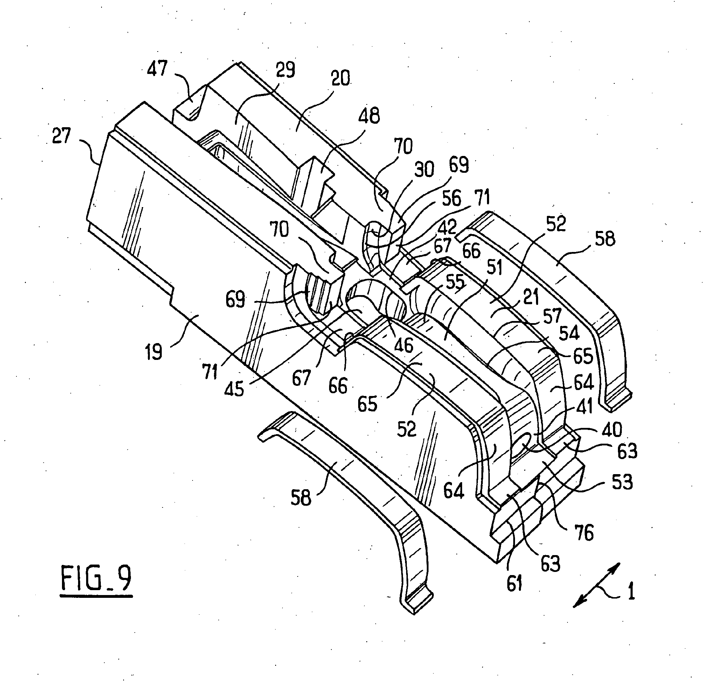

Ce deuxième mode de réalisation va être décrit à présent aux figures 6 à 9 sur lesquelles, pour des raisons de simplicité et en raison de grandes analogies avec le mode de réalisation décrit en référence aux figures 1 à 5, on a conservé les mêmes références numériques.

En raison de ces grandes analogies, on ne décrira en référence aux figures 6 à 9 que les différences entre ce mode de réalisation et celui qui a été décrit en référence aux figures 1 à 5, et l'on se reportera pour les points communs à la description de ces figures 1 à 5.

On trouve à l'identique, en particulier avec les mêmes relations de symétrie mutuelle ou respective par rapport au plan 7 et 18, les faces 20 et 27 des moitiés supérieures 19 de moule 6, les moitiés respectivement correspondantes 29 du canal 32, les pipes 38 respectivement correspondantes, les dispositions accessoires telles que les découpes 47 et les passages 48, le bouchon 36 et, en ce qui concerne les dispositions caractéristiques de la présente invention, les voiles 69 qui conservent dans ce cas leur symétrie mutuelle par rapport au plan 18.

On retrouve également à l'identique ou sensiblement à l'identique, avec leur symétrie mutuelle par rapport aux deux plans 7 et 18, les parties de surface 51 des faces 21 des moitiés 19 de moule 6, dont les parties de surfaces 52 ne conservent par contre leur symétrie que par rapport au plan 7, de l'une à l'autre les moitiés 19 du moule 6.

En effet, tout en conservant une conformation identique celle qui a été décrite en référence aux figures 1 à 5, c'est-à-dire une conformation adaptée à celle du profil d'un rail 2 tel qu'il est défini par un chant 10 et la demi-face supérieure ou dessus 11 correspondante du patin 8, le côté 13 correspondant de l'âme 12 et la demi-face inférieure ou dessous 15 correspondante du champignon 14, et en conservant à l'identique le revêtement 58, les parties de surface 52 situées d'un côté du plan 18 sont décalées, exclusivement dans le sens de la hauteur, par rapport aux parties de surface 52 situées de l'autre côté de ce plan 18, d'une valeur H qui est avantageusement égale ou légèrement supérieur, à la valeur maximale de Δh admissible avec un moule réalisé conformément au mode décrit en référence aux figures 1 à 5. En relation avec les valeurs numériques indiquées à titre d'exemple non limitatif à propos du mode de réalisation décrit en référence aux figures 1 à 5, à savoir pour une valeur maximale de trois millimètres de Δh, H peut présenter par exemple une valeur de l'ordre de quatre millimètres.

Ce décalage H dans le sens de la hauteur se traduit par une légère différence, non significative et de ce fait non détaillée ici, dans la forme du raccordement de chaque partie de surface 51 aux parties de surface 52 correspondantes et par la présence d'un gradin 67, suivant le plan 18, dans chacun des épaulements 61 qui restent plans et perpendiculaires à ce plan 18, ainsi qu'au plan 7, respectivement de part et d'autre du plan 18.

Dans ces conditions, comme le comprendra un Homme du métier, une fois l'alignement réalisé entre les faces supérieures ou dessus 16 des champignons 14 de deux rails 2 à souder entre eux, présentant une différence d'usure Δh au moins égale à H et pouvant être supérieure à H, d'une valeur pouvant aller jusqu'à la valeur maximale admissible pour Δh dans le cas du mode de réalisation décrit en référence des figures 1 à 5, les revêtements compressibles d'étanchéité 57 peuvent s'adapter aux chants 10, aux demi-faces supérieures ou dessus 11 du patin 8 des deux rails, aux côtés 13 de leur âme 12 et aux demi-faces inférieures ou dessous 15 de leur champignon 14 pour assurer une étanchéité à l'encontre du métal de soudure à l'état liquide, dans des conditions similaires à celles qui ont été décrites en référence aux figures 1 à 5.

Pour s'adapter à la différence de niveau existant alors entre les faces inférieures 9 des deux patins 8 ainsi qu'aux gradins 7, par l'intermédiaire du revêtement 59, la face supérieure 23 de la plaque de fond 22 n'est plus plane mais, tout en restant symétrique par rapport au plan 7, présente une dissymétrie par rapport au plan 18 de façon à présenter respectivement de part et d'autre de celui-ci, en particulier dans sa zone périphérique 60 portant le revêtement 59, deux parties planes 72 et 73 qui sont l'une et l'autre perpendiculaires aux deux plans 7 et 18 mais dont la deuxième est décalée vers le haut, par rapport à la première, de la valeur H et raccordée à la première par une partie 74 qui coupe obliquement le plan 18 pour se raccorder sans transition brutale à l'une et l'autre de ces parties 68 et 69.

Naturellement, le revêtement 59 est également appliqué à cette partie 74 et, grâce à sa compressibilité, assure un contact étanche avec les faces inférieures des deux patins 8 comme avec les épaulements 61, y compris au niveau de leur gradin 67.

On observera que, en s'appliquant contre les épaulements 61 respectivement de part et d'autre du gradin 67, par l'intermédiaire du revêtement 59, les parties 72 et 73, par leur décalage dans le sens de la hauteur, compensent le décalage mutuel des deux parties de chaque épaulement 61 dans ce même sens et que, lorsque la plaque de fond 22 présente une face inférieure 75 plane, perpendiculaire au deux plans 18 et 7, cette face inférieure 75 peut présenter un positionnement en tout point identique dans le cas du mode de réalisation du moule 6 selon l'invention qui vient d'être décrit en référence aux figures 6 à 8 et dans le cas du mode de réalisation décrit en référence aux figures 1 à 5, ce qui permet d'utiliser les mêmes carcasses pour retenir les pièces constitutives 19, 22 de ces moules quel que soit leur mode de réalisation.

En référence aux valeurs numériques indiquées à titre d'exemple non limitatif en relation avec ces deux modes de réalisation d'un moule selon l'invention, alors que le mode de réalisation décrit en référence aux figures 1 à 5 peut s'adapter à des rails 2 dont le champignons 14 présente une usure maximale de l'ordre de 15 millimètres dans le sens de la hauteur avec une différence Δh de hauteur de champignon au plus égale à trois millimètres, le mode de réalisation décrit en référence aux figures 6 à 8 peut s'adapter sans difficulté à des rails 2 dont le champignon 14 présente une usure pouvant aller également jusqu'à 15 millimètres, avec une différence Δh de hauteur du champignon allant de 4 à 7 millimètres.

Ces exemples ne sont cependant nullement limitatifs, et l'on ne sortirait pas du cadre de la présente invention telle que définie dans les revendications ci-jointes en réalisant conformément à celle-ci des moules susceptibles de s'adapter, en particulier, à des usures supérieures ou à des différences d'usures supérieures.

En outre, un Homme du métier comprendra aisément que les avantages découlant des caractéristiques conformes à la présente invention telle que définie dans les revendications ci-jointes se retrouveront dans le cas de la soudure de rails présentant un profil différent du profil Vignole qui a été illustré, et dans le cas de moules présentant une conception différente de la conception en trois pièces qui vient d'être décrite, et l'Homme du métier pourra adapter à chaque cas les dispositions qui viennent d'être décrites, sans rencontrer de difficulté et sans sortir pour autant du cadre de la présente invention telle que définie dans les revendications ci-jointes.

## Revendications

1. Moule pour la soudure aluminothermique de rails (2) de chemin de fer mutuellement alignés longitudinalement, du type comportant plusieurs pièces (19, 22) en matériau réfractaire rigide, susceptibles d'être assemblées temporairement autour de deux abouts transversaux (3) de rail (2) à souder en définissant ensemble :
- une empreinte de moulage (25), ouverte vers le haut, agencée pour recevoir par coulée un métal de soudure à l'état liquide et enveloppant les deux abouts (3), un intervalle (4) ménagé entre eux et une première zone (24) de chaque rail (2), immédiatement voisine de l'about (3) correspondant, pour communiquer une forme déterminée au métal de soudure pendant sa solidification,
- deux portées continues (60, 63 à 68, 71) agencées pour prendre appui contre une deuxième zone (26) de chaque rail (2) immédiatement voisine de la première zone (24) de celui-ci, à l'opposé de l'about (3) correspondant par rapport à cette première zone (24), et portant solidairement un revêtement compressible (58, 59) d'étanchéification dudit appui à l'encontre du métal de soudure à l'état liquide,
**caractérisé en ce que** le dit revêtement compressible (58, 59) est limité à des .parties (60, 63, 64, 65, 66) de chaque portée d'appui correspondant au dessous (9), aux côtés (10) et au dessus (11) d'un patin (8) du rail (2) correspondant, aux côtés (13) d'une âme (12) du rail (2) correspondant et au dessous (15) d'un champignon (14) du rail (2)correspondant, **en ce que** ledit matériau réfractaire rigide est directement exposé dans des parties (67, 68, 71) de chaque portée d'appui correspondant aux côtés (17) et au dessus (16) du champignon (14) du rail (2) correspondant, **en ce que** chaque portée d'appui présente, entre sa partie (68, 71) correspondant au dessus (16) du champignon (14) du rail (2) correspondant et ledit revêtement compressible (58) de sa partie (66) correspondant au dessous (15) du champignon (14) du rail (2) correspondant, à l'état comprimé au maximum en référence à des conditions normales d'utilisation, un espacement qui est inférieur à l'espacement (h) entre le dessus (16) et le dessous (15) du champignon d'un rail (2) neuf, et **en ce que** ledit matériau réfractaire rigide est choisi ou traité pour faciliter son enlèvement sélectif au moins dans les parties (68,71) de chaque portée d'appui correspondant au dessus (16) du champignon (14) du rail (2) correspondant et permettre ainsi une adaptation du moule (6) à des rails (2) dont le champignon (14) est usé, avec appui continu des dites portée d'appui (60, 63 à 68, 71) au dessous (9), sur les côtés (10) et au dessus (11) du patin (8) des deux rails (2), sur les côtés (13) de l'âme (12) des deux rails (2) et au dessous (15), sur les côtés (17) et au dessus (16) du champignon (14) des deux rails (2).

2. Moule selon la revendication 1, **caractérisé en ce qu'**il présente un amincissement localisé de chaque portée d'appui dans sa partie (68, 71) correspondant au dessus (16) du champignon du rail (2) correspondant.

3. Moule selon l'une quelconque des revendications 1 et 2, **caractérisé en ce qu'**il comporte des repères (68a, 68b, 68c) d'enlèvement sélectif le long des parties (68, 71) de chaque portée d'appui correspondant au dessus (16) du champignon (14) du rail (2) correspondant.

4. Moule selon la revendication 3 dans sa relation de dépendance vis-à-vis de la revendication 2, **caractérisé en ce que** lesdits repères (68a, 68b, 68c) sont constitués par des gradins (68a, 68b, 68c) dans ledit amincissement localisé.

5. Moule selon l'une quelconque des revendications 1 à 4, **caractérisé en ce que** les deux portées d'appui (60, 63 à 68, 71) sont mutuellement symétriques par rapport à un plan (18) destiné à coïncider au moins approximativement avec un plan transversal moyen (18) de symétrie entre les deux abouts de rail (3).

6. Moule selon l'une quelconque des revendications 1 à 4, **caractérisé en ce que** les parties (67, 68, 71) des deux portées d'appui correspondant au dessus (16) et aux côtés (17) du champignon (14) des rails (2) sont mutuellement symétriques par rapport à un plan (18) destiné à coïncider au moins approximativement avec un plan transversal moyen (18) de symétrie entre les deux abouts de rail (3) et **en ce que** les parties (60, 63, 64, 65, 66) des portées d'appui correspondant au dessous (9), aux côtés (10) et au dessus (11) du patin (8), aux côtés (13) de l'âme (12) et au dessous (15) du champignon (14), respectivement de part et d'autre dudit plan (18), sont mutuellement dissymétriques par rapport à celui-ci, par différence (H) d'espacement par rapport à la partie (68, 71) de la portée d'appui respective correspondant au dessus (16) du champignon (14) du rail (2) correspondant.

7. Moule selon l'une quelconque des revendications 1 à 6, **caractérisé en ce que** les dites pièces (19, 22) comportant deux pièces (19) destinées à être placées respectivement de part et d'autre de chaque rail (2), mutuellement symétriques par rapport à un plan (7) destiné à coïncider au moins approximativement avec un plan longitudinal moyen (7) de symétrie respective des deux abouts de rail (3) et constituant des parties respectives (63 à 68, 71) des dites portées correspondant aux côtés et au dessus (4) du patin (8) des rails (2), aux côtés (13) de l'âme (12), et au dessous (15), aux côtés (17) et au dessus (16) du champignon (14) des rails (2).

8. Moule selon la revendication 7, **caractérisé en ce que** lesdites pièces (19, 22) comportent une troisième pièce (22), destinée à être placée en dessous de chaque rail (2) et constituant des parties des dites portées (60, 63 à 68, 71) correspondant au dessous (9) du patin (8) des rails (2).

9. Moule selon l'une quelconque des revendications 1 à 8, **caractérisé en ce que** le revêtement (58, 59) comporte un feutre de fibres réfractaire (19, 22) liées par un liant réfractaire, collé aux dites pièces au moyen d'une colle réfractaire.

10. Moule selon l'une quelconque des revendications 1 à 9, **caractérisé en ce que** ledit matériau réfractaire rigide est un sable aggloméré.

## Claims

1. Mould for thermit welding of railway rails (2) mutually aligned longitudinally, of the type comprising several parts (19, 22) in rigid refractory material able to be assembled temporarily around two transverse ends (3) of rail (2) to be welded, together defining:
- a mould die cavity (25) open towards the top, arranged to receive cast weld metal in the liquid state and surrounding the two rail ends (3), a gap (4) arranged between them and a first portion (24) of each rail (2), in the immediate vicinity of the corresponding rail end (3), to impart a determined shape to the weld metal as it solidifies,
- two continuous surfaces (60, 63 to 68, 71) arranged to bear against a second portion (26) of each rail (2) in the immediate vicinity of the first portion (24) thereof, opposite the corresponding rail end (3) relative to this first portion (24), and jointly carrying a compressible sealer lining (58, 59) to seal said bearing against the weld metal in the liquid state,
**characterized in that** said compressible lining (58, 59) is limited to parts (60, 63, 64, 65, 66) of each bearing surface corresponding to the underside (9), to the sides (10) and to the top (11) of a foot (8) of the corresponding rail (2), to the sides (13) of a web (12) of the corresponding rail (2) and to the underside (15) of a head (14) of the corresponding rail (2), **in that** said rigid refractory material is directly exposed in parts (67, 68, 71) of each bearing surface corresponding to the sides (17) and to the top (16) of the head (14) of the corresponding rail (2), **in that** each bearing surface, between its part (68, 71) corresponding to the top (16) of the head (14) of the corresponding rail (2) and said compressible lining (58) of its part (66) corresponding to the underside (15) of the head (14) of the corresponding rail (2) in its maximum compressed state with reference to normal conditions of use, comprises a gap which is smaller than the gap (h) between the top (16) and the underside (15) of the head of a new rail (2), and **in that** said rigid refractory material is chosen or treated to facilitate its selective removal at least in parts (68, 71) of each bearing surface corresponding to the top (16) of the head (14) of the corresponding rail (2), thereby enabling adaptation of the mould (6) to rails (2) whose head (14) is worn, with continuous bearing of said bearing surfaces (60, 63 to 68, 71) on the underside (9), sides (10) and top (11) of the foot (8) of the two rails (2), on the sides (13) of the web (12) of the two rails (2) and the underside (15), on the sides (17) and top (16) of the head (14) of the two rails (2).

2. Mould according to claim 1, **characterized in that** it has localized thinning of each bearing surface in its part (68, 71) corresponding to the top (16) of the head of the corresponding rail (2).

3. Mould according to either of claims 1 and 2, **characterized in that** it comprises reference marks (68a, 68b, 68c) for selective removal along the parts (68, 71) of each bearing surface corresponding to the top (16) of the head (14) of the corresponding rail (2).

4. Mould according to claim 3 in its dependency upon claim 2, **characterized in that** said reference marks (68a, 68b, 68c) consist of tiers (68a, 68b, 68c) in said localized thinning.

5. Mould according to any of claims 1 to 4, **characterized in that** the two bearing surfaces (60, 63 to 68, 71) are mutually symmetrical relative to a plane (18) intended to coincide at least approximately with a mean transverse plane (18) of symmetry between the two rail ends (3).

6. Mould according to any of claims 1 to 4, **characterized in that** the parts (67, 68, 71) of the two bearing surfaces corresponding to the top (16) and to the sides (17) of the head (14) of the rails (2) are mutually symmetrical relative to a plane (18) intended to coincide at least approximately with a mean transverse plane (18) of symmetry between the two rail ends (3), and **in that** the parts (60, 63, 64, 65, 66) of the bearing surfaces corresponding to the underside (9) to the sides (10) and to the top (11) of the foot (8), to the sides (13) of the web (12) and to the underside (15) of the head (14), respectively either side of said plane (18), are mutually dissymmetrical relative thereto, through the difference (H) in gap relative to the part (68, 71) of the respective bearing surface corresponding to the top (16) of the head (14) of the corresponding rail (2).

7. Mould according to any of claims 1 to 6, **characterized in that** said parts (19, 22) comprising two parts (19) intended to be positioned respectively either side of the each rail (2), mutually symmetrical relative to a plane (7) intended to coincide at least approximately with a mean longitudinal plane (7) of respective symmetry of the two rail ends (3) and forming respective parts (63 to 68, 71) of said bearing surfaces corresponding to the sides and to the top (4) of the foot (8) of the rails (2), to the sides (13) of the web (12), and the underside (15), to the sides (17) and to the top (16) of the head (14) of the rails (2).

8. Mould according to claim 7, **characterized in that** said parts (19, 22) comprise a third part (22) intended to be positioned underneath each rail (2) and forming parts of said bearing surfaces (60, 63 to 68, 71) corresponding to the underside (9) of the foot (8) of the rails (2).

9. Mould according to any of claims 1 to 8, **characterized in that** the lining (58, 59) comprises a felt of refractory fibres (19, 22) bound by a refractory binder, bonded to said parts by means of a refractory adhesive.

10. Mould according to any of claims 1 to 9 **characterized in that** said rigid refractory material is a sand agglomerate.

## Patentansprüche

1. Form zum Thermitschweißen von Eisenbahnschienen (2), die in Längsrichtung aufeinander ausgerichtet sind, von dem Typ, der mehrere Teile (19, 22) aus starrem feuerfestem Material umfasst, die geeignet sind, vorübergehend um zwei Querenden (3) von zu verschweißenden Schienen (2) angebracht zu werden, wobei sie miteinander definieren:
- einen nach oben offenen Formhohlraum (25), der vorgesehen ist, um durch Gießen ein Schweißmetall in flüssigem Zustand aufzunehmen, und der umgibt: die beiden Enden (3), einen Zwischenraum (4), der zwischen ihnen gebildet ist, und einen ersten Bereich (24) jeder Schiene (2), der unmittelbar an das entsprechende Ende (3) angrenzt, um dem Schweißmetall während seiner Verfestigung eine bestimmte Form zu verleihen,
- zwei durchgehende Vorsprünge (60, 63 bis 68, 71), die vorgesehen sind, um an einem zweiten Bereich (26) jeder Schiene (2) anzuliegen, der unmittelbar an den ersten Bereich (24) der Letztgenannten angrenzt, und zwar an der dem entsprechenden Ende (3) entgegengesetzten Seite in Bezug auf diesen ersten Bereich (24), und die gemeinsam eine komprimierbare Beschichtung (58, 59) tragen, um die Auflage gegenüber dem in flüssigem Zustand befindlichen Schweißmetall abzudichten,
**dadurch gekennzeichnet, dass** die komprimierbare Beschichtung (58, 59) auf Teile (60, 63, 64, 65, 66) jedes Auflagevorsprungs beschränkt ist, die Folgendem entsprechen: der unteren Seite (9), den Seitenflächen (10) und der oberen Seite (11) eines Fußes (8) der entsprechenden Schiene (2), den Seitenflächen (13) eines Stegs (12) der entsprechenden Schiene (2) und der unteren Seite (15) eines Kopfs (14) der entsprechenden Schiene (2), dass das starre feuerfeste Material in den Teilen (67, 68, 71) jedes Auflagevorsprungs, der den Seitenflächen (17) und der oberen Seite (16) des Kopfs (14) der entsprechenden Schiene (2) entspricht, direkt exponiert ist, dass jeder Auflagevorsprung zwischen seinem Teil (68, 71), der der oberen Seite (16) des Kopfs (14) der entsprechenden Schiene (2) entspricht, und der komprimierbaren Beschichtung (58) seines Teils (66), der der unteren Seite (15) des Kopfs (14) der entsprechenden Schiene (2) entspricht, in dem in Bezug auf normale Nutzungsbedingungen maximal komprimierten Zustand einen Abstand aufweist, der kleiner ist als der Abstand (h) zwischen der oberen Seite (16) und der unteren Seite (15) des Kopfs (2) einer neuen Schiene, und dass das starre feuerfeste Material so gewählt oder behandelt wird, dass es seine selektive Entfernung mindestens an den Teilen (68, 71) jedes Auflagevorsprungs erlaubt, die der oberen Seite (16) des Kopfs (14) der entsprechenden Schiene (2) erleichtert und auf diese Weise eine Anpassung der Form (6) an Schienen (2) erlaubt, deren Kopf (14) abgenutzt ist, mit durchgehender Auflage der Auflagevorsprünge (60, 63 bis 68, 71) an der unteren Seite (9), den Seitenflächen (10) und der oberen Seite (11) des Fußes (8) der beiden Schienen (2), an den Seitenflächen (13) des Stegs (12) der beiden Schienen (2) und an der unteren Seite (15), den Seitenflächen (17) und der oberen Seite (16) des Kopfs (14) der beiden Schienen (2).

2. Form nach Anspruch 1, **dadurch gekennzeichnet, dass** sie eine lokalisierte Verjüngung jedes Auflagevorsprungs in seinem Teil (68, 71) aufweist, der der oberen Seite (16) des Kopfs der entsprechenden Schiene (2) entspricht.

3. Form nach einem der Ansprüche 1 und 2, **dadurch gekennzeichnet, dass** sie Markierungen (68a, 68b, 68c) zum selektiven Entfernen entlang von Teilen (68, 71) jedes Auflagevorsprungs umfasst, die der Oberseite (16) des Kopfs (14) der entsprechenden Schiene (2) entsprechen.

4. Form nach Anspruch 3 in seiner Abhängigkeitsbeziehung gegenüber Anspruch 2, **dadurch gekennzeichnet, dass** die Markierungen (68a, 68b, 68c) durch Stufen (68a, 68b, 68c) in der lokalisierten Verjüngung gebildet sind.

5. Form nach einem der Ansprüche 1 bis 4, **dadurch gekennzeichnet, dass** die beiden Auflagevorsprünge (60, 63 bis 68, 71) in Bezug auf eine Ebene (18) zueinander symmetrisch sind, die dazu bestimmt ist, zumindest annähernd mit einer quer verlaufenden, mittleren Symmetrieebene (18) zwischen den beiden Schienenenden (3) zusammenzufallen.

6. Form nach einem der Ansprüche 1 bis 4, **dadurch gekennzeichnet, dass** die Teile (67, 68, 71) der beiden Auflagevorsprünge, die der oberen Seite (16) und den Seitenflächen (17) des Kopfs (14) der Schienen (2) entsprechen, in Bezug auf eine Ebene (18) zueinander symmetrisch sind, die dazu bestimmt ist, zumindest annähernd mit einer mittleren Quersymmetrieebene (18) zwischen den beiden Schienenenden (3) zusammenzufallen, und dass die Teile (60, 63, 64, 65, 66) der Auflagevorsprünge, die der unteren Seite (9), den Seitenflächen (10) und der oberen Seite (11) des Fußes (8), den Seitenflächen (13) des Stegs (12) und der unteren Seite (15) des Kopfs (14) jeweils zu beiden Seiten der Symmetrieebene (18) entsprechen, in Bezug auf diese zueinander unsymmetrisch sind, und zwar durch eine Differenz (H) des Abstands in Bezug auf den Teil (68, 71) des jeweiligen Auflagevorsprungs, der der oberen Seite (16) des Kopfs (14) der entsprechenden Schiene (2) entspricht.

7. Form nach einem der Ansprüche 1 bis 6, **dadurch gekennzeichnet, dass** die Teile (19, 22) zwei Teile (19) umfassen, die dazu bestimmt sind, an der einen bzw. der anderen Seite jeder Schiene (2) angeordnet zu werden, die in Bezug auf eine Ebene (7) zueinander symmetrisch sind, die dazu bestimmt ist, zumindest annähernd mit einer jeweiligen mittleren Längssymmetrieebene (7) der beiden Schienenenden (3) zusammenzufallen und die jeweilige Teile (63 bis 68, 71) der Auflagen bildet, die den Seitenflächen und der oberen Seite (4) des Fußes (8) der Schienen (2), den Seitenflächen (13) des Stegs (12) und der unteren Seite (15), den Seitenflächen (17) und der oberen Seite (16) des Kopfs (14) der Schienen (2) entsprechen.

8. Form nach Anspruch 7, **dadurch gekennzeichnet, dass** die Teile (19, 22) einen dritten Teil (22) umfassen, der dazu bestimmt ist, unter jeder Schiene (2) angeordnet zu werden und Teile der Vorsprünge (60, 63 bis 68, 71) bildet, die der unteren Seite (9) des Fußes (8) der Schienen (2) entspricht.

9. Form nach einem der Ansprüche 1 bis 8, **dadurch gekennzeichnet, dass** die Beschichtung (58, 59) einen Filz aus feuerfesten Fasern (19, 22) umfasst, die durch ein feuerfestes Bindemittel miteinander verbunden sind, wobei der Filz mit Hilfe eines feuerfesten Klebers an die Teile geklebt wird.

10. Form nach einem der Ansprüche 1 bis 9, **dadurch gekennzeichnet, dass** das starre feuerfeste Material ein agglomerierter Sand ist.
